# EUROPÄISCHE PATENTSCHRIFT

(11) **EP 1 860 364 B1**
(45) Veröffentlichungstag und Bekanntmachung des Hinweises auf die Patenterteilung: **13.05.2009**
(21) Anmeldenummer: 07010243.9
(22) Anmeldetag: 23.05.2007
(51) Int. Cl.: F16L 47/32, F16L 41/02, F16L 55/033, E03C 1/122

(54) **Rohrleitungsanschlussstück**
Pipe connecting piece
Pièce de raccordement d'une conduite

(30) Priorität: 23.05.2006 DE 102006024254
(43) Veröffentlichungstag der Anmeldung: 28.11.2007
(73) Patentinhaber: Poloplast GmbH & Co. KG, 4060 Leonding (AT)
(72) Erfinder: Mayrbäurl, Erwin, Dipl.-Ing., 4481 Asten (AT)
(74) Vertreter: Schmitz, Hans-Werner

(56) Entgegenhaltungen:
- GB-A- 1 172 660
- JP-A- 50 045 446
- US-A- 1 629 208
- US-A- 1 825 103
- US-A- 4 121 914
- US-A1- 2004 194 840

## Beschreibung

Die Erfindung bezieht sich auf ein Rohrleitungsanschlussstück mit einem rohrförmigen Hauptstrang, in welchen ein rohrförmiger Nebenstrang mündet.

Rohranschlussstücke der beschriebenen Art sind aus dem Stand der Technik in unterschiedlichen Ausgestaltungsformen vorbekannt, sie werden auch als Formstücke bezeichnet. Sie dienen insbesondere zur Abwasserableitung, insbesondere in Hausinstallationssystemen.

Bei Abwasserleitungen, welche drucklos betrieben werden, stellt die Schalldämmung ein wesentliches Kriterium dar. Durch die nur teilweise Füllung des Rohrsystems mit Abwasser ergeben sich höchst komplizierte Strömungsverhältnisse, welche insbesondere bei Formstücken, bei denen die Strömungsrichtung geändert wird, zu unerwünschten Geräuschentwicklungen und Schallemissionen führen.

Aus der den nächstkommenden Stand der Technik bildenden US 4 121 914 A ist ein Rohrsystem vorbekannt, bei welchem der Hauptstrang wellenförmig ausgebildet ist, um die Hauptströmung aktiv umzulenken. Auf diese Weise soll ein Eintreten der Strömung in den Nebenstrang verhindert werden.

Die JP 50 045446 A beschreibt ein Rohrsystem, bei welchem der Hauptstrang im Bereich der Einmündung der Nebenstränge stark erweitert ausgebildet ist und bei welchem die Nebenstränge mit einer Krümmung in den Hauptstrang münden.

Ein weiteres Rohrleitungssystem ist aus der US 1 825 103 A vorbekannt. Dabei ist im Bereich der Einmündung bzw. Abzweigung von Kanälen eine strömungstechnische Verdickung vorgesehen, um unter Beibehaltung der laminaren Strömung Turbulenzen zu vermeiden.

Eine weitere Ausgestaltung eines Rohrleitungsanschlussstücks ist in der US 1 629 208 A vorbeschrieben. Dabei handelt es sich um einen Teil eines Syphons, bei welchem eine Lippe des Hauptstranges bis unter die Unterkante des Nebenstranges reicht, um einen luftdichten Flüssigkeitsabschluss zu erzielen.

Die US 2004/194840 A1 beschreibt einen Bogenabzweiger, bei welchem die Verschneidung eines Torus mit einem Zylinder entsteht. Die Schnittlinie ist dabei nicht weiter bezeichnet und wirkt keinesfalls als Abrisskante, zumal ein vertikaler Fall-Strang in einen horizontal liegenden Hauptstrang umgeleitet wird.

Die GB 1 172 660 A offenbart ebenfalls einen Bogenabzweiger, bei welchem ein kreisbogenförmig gekrümmter Nebenstrang in einen zylindrischen Hauptstrang einläuft.

Der Erfindung liegt die Aufgabe zugrunde, ein Rohrleitungsanschlussstück der eingangs genannten Art zu schaffen, welches bei einfachem Aufbau und einfacher, kostengünstiger Herstellbarkeit ein hohes Maß an Schalldämmung sowie eine geringe Geräuschentwicklung im Rohrsystem bei Durchströmung von Fluid aufweist.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass zumindest ein Teilbereich einer Schnittlinie zwischen dem Hauptstrang und dem Nebenstrang in Form einer Abrisskante ausgebildet ist.

Die erfindungsgemäß mit einer Abrisskante versehene Schnittlinie ergibt sich bei der geometrischen Durchdringung der zylindrischen Grundform des Hauptstranges durch die zylindrische Grundform des Nebenstranges im Bereich der Einmündung des Nebenstranges in den Hauptstrang. Es versteht sich, dass die Rohrleitungsanschlussstücke mit zusätzlichen Anschlussmuffen oder Ähnlichem versehen sein können. Diese können andere Querschnitte oder andere Dimensionierungen aufweisen, als der Einlaufbereich des Nebenstrangs in den Hauptstrang. Erfindungsgemäß ist die Schnittlinie oder Schnittkurve der Durchdringung der beiden zylindrischen Grundformen im Bereich des Einlaufs des Nebenstrangs in den Hauptstrang zu betrachten.

Durch die erfindungsgemäß vorgesehene Abrisskante, welche sich zumindest über einen Teilbereich der Schnittlinie erstreckt, wird vermieden, dass Abwasser, welches durch den Hauptstrang strömt, in den Nebenstrang einläuft und auf die Wandung des Nebenstrangs aufprallt. Ein derartiges Einlaufen oder Aufprallen hat eine erhebliche Geräuschentwicklung zur Folge. Durch die Abrisskante wird dieser Effekt unterbunden. Die durch den Hauptstrang laufende Fluidströmung wird durch die Abrisskante daran gehindert, in den Nebenstrang einzudringen oder einzufließen, sondern verbleibt vielmehr, bedingt durch die Abrisskante, im Hauptstrang.

Das erfindungsgemäße Rohrleitungsanschlussstück zeichnet sich somit durch eine sehr geringe Schallemission aus, auch wenn das abströmende Fluid des Hauptstranges diesen nur teilweise füllt und/oder sich in komplizierten Strömungsverhältnissen befindet, teils laminar, teils turbulent und/oder in spiralförmiger Strömung längs der Wandung des Hauptstrangs.

Besonders vorteilhaft ist es, wenn erfindungsgemäß die Abrisskante so ausgebildet ist, dass hierdurch ein Ablösen der Strömung und eine Abweichung der Strömungsrichtung des Fluids im Hauptstrang gänzlich unterbunden werden.

Der Hauptstrang des erfindungsgemäßen Rohrleitungsanschlussstücks ist bevorzugterweise so ausgebildet, dass dieser vertikal einbaubar ist, so dass der Hauptstrang als Fallrohr dient. Es ist jedoch auch möglich, andere Zuordnungen vorzunehmen. Auch ist es möglich, den Nebenstrang mittig oder exzentrisch und/oder in einem Winkel in den Hauptstrang einmünden zu lassen. Durch geeignete Ausgestaltung und Dimensionierung der Abrisskante ergeben sich auch hierbei die erfindungsgemäßen vorteilhaften Effekte.

Erfindungsgemäß ist es besonders günstig, wenn die Abrisskante an einer Seite durch einen zylindrischen Bereich des Hauptstrangs und an einer anderen Seite durch einen Ansatz an einen zylindrischen Bereich des Nebenstrangs gebildet wird. Hierdurch ist es auf besonders einfache und kostengünstige Weise möglich, das erfindungsgemäße Rohrleitungsanschlussstück zu produzieren, beispielsweise als Kunststoff-Spritzgussteil. Die Ausprägung der Abrisskante kann durch ein einfaches Werkzeug mit einem Zugkern zur Erzeugung des Nebenstrangs hergestellt werden. Durch entsprechende Profilierung der vorderen Kante des Zugkerns wird dabei die Abrisskante auf zuverlässige und kostengünstige Weise erzeugt.

Erfindungsgemäß kann die Abrisskante in bevorzugter Ausgestaltung an der dem Nebenstrang zugewandten Seite hinterschnitten oder mit einem Radius versehen sein. Die Ausgestaltungen können in optimaler Weise an die Nenndurchmesser sowohl des Hauptstrangs als auch des Nebenstrangs angepasst und entsprechend optimiert werden.

Besonders günstig ist es, wenn die Abrisskante im Bereich ihrer maximalen Höhe vorzugsweise eine Höhe zwischen 1 mm und 2,5 mm aufweist. Es kann auch günstig sein, die Abrisskante so auszubilden, dass diese im Bereich ihrer maximalen Höhe eine Höhe zwischen 0,1 mm und 10 mm aufweist. Der Querschnitt der Abrisskante liegt bevorzugterweise in einem Winkel zwischen 10° und 40°, wobei der keilförmige Querschnitt der Abrisskante betrachtet wird. Erfindungsgemäß ist der keilförmige Abschnitt der Abrisskante mit einem Winkel zwischen 1° und 85° ausgebildet.

Um eine optimale Wirkung zu erzielen, ist vorgesehen, dass sich die Abrisskante vom Scheitel der Schnittlinie oder Schnittkurve, die sich bei der Durchdringung der virtuellen Zylinder des Hauptstrangs und des Nebenstrangs ergibt, bis zu jeweils einem seitlichen Umfangbereich von 90° erstreckt. Die Abrisskante erstreckt sich somit, stirnseitig auf den Nebenstrang betrachtet, über einen oberen Halbkreis der Öffnung des Nebenstrangs in den Hauptstrang.

Die Abrisskante weist im Scheitel die größte Höhe auf und nimmt zum jeweiligen seitlichen Bereich hin in ihrer Höhe ab, so dass sie auf eine Höhe von 0 mm ausläuft. Hierdurch kann der maximale Effekt der Verhinderung eines Strömungsabrisses erzielt werden.

Zusätzlich zu der oben beschriebenen Höhe in einem Bereich von 1 mm bis 2,5 mm und dem Querschnittswinkel zwischen 10° und 40° können erfindungsgemäß weitere Abwandlungen vorgesehen sein. So ist es möglich, die Hinterschneidung der Abrisskante zu steigern, um einen besseren, nach unten gerichteten (bei einer vertikalen Installation des Hauptstrangs) Strömungseinlauf durch den Nebenstrang zu realisieren. Auch hierbei ist es vorteilhaft, dass die Abrisskante an ihrer dem Nebenstrang zugewandten Rückseite die durch den Nebenstrang in den Hauptstrang eintretende Strömung umlenkt, so dass diese nicht mit voller Geschwindigkeit auf die gegenüberliegende Wandung des Hauptstrangs aufprallt, sondern tangential an diese Wandung einläuft.

Um sowohl die Strömung des Hauptstranges als auch die einlaufende Strömung des Nebenstrangs in besonders günstiger Weise zu beeinflussen und schalldämmend zu führen, kann es weiterhin vorteilhaft sein, wenn die Schnittlinie oder Schnittkurve in ihrem unteren, nicht mit der Abrisskante versehenen Bereich mit einem Radius versehen ist. Auch hierbei kann es günstig sein, den Radius vom seitlichen Bereich (90° zum Scheitel versetzt) mit 0 mm beginnen zu lassen und an dem unteren Scheitel mit einem Maximalwert auszuführen. Hierdurch ergibt sich eine bessere Umlenkung der durch den Nebenstrang einlaufenden Fluidströmung sowie ein besseres Ablaufen geringfügiger Fluidmengen, die dann trotz der Abrisskante in den Nebenstrang eintreten sollten. Der Radius kann beispielsweise einen Maximalwert von 10 mm im unteren Scheitelpunkt aufweisen und auf 0 mm im seitlichen Scheitelpunkt zurückgehen.

Die Kante der Abrisskante selbst ist bevorzugterweise sehr scharfkantig ausgeführt. Dies ergibt sich durch die beschriebene Herstellungsweise mit einem Zugkern weitgehend von selbst.

Das erfindungsgemäße Rohrleitungsanschlussstück ist, wie erläutert, nicht auf eine Anordnung beschränkt, bei welcher der Nebenstrang hinsichtlich seiner Mittelachse senkrecht auf die Mittelachse des Hauptstranges auftrifft. Vielmehr sind auch in einem Winkel angeordnete Ausgestaltungsvarianten möglicht.

Bei einem Einsatz des erfindungsgemäßen Rohrleitungsanschlussstücks in einer nicht-vertikalen Einbaulage kann es günstig sein, die Dimensionierung und Anordnung der Abrisskante längs der Schnittkurve bzw. Schnittlinie zu verschieben, um die geänderte Strömungsrichtung zu berücksichtigen.

Im Folgenden wird die Erfindung anhand eines Ausführungsbeispiels in Verbindung mit der Zeichnung beschrieben. Dabei zeigt:
- Fig. 1: eine Seiten-Schnittansicht eines erfindungsgemäßen Rohrleitungsanschlussstücks,
- Fig. 2: eine stirnseitige Ansicht gemäß Blickrichtung von rechts der Fig. 1,
- Fig. 3: eine vergrößerte Detail-Schnittansicht gemäß Fig. 1,
- Fig. 4: eine nochmals vergrößerte Detail-Schnittansicht, analog Fig. 3, und
- Fig. 5: eine weitere Darstellung, analog den Fig. 3 und 4, bei welcher die Abrisskante 4 zumindest teilweise in den Freiraum des Hauptstranges 1 ragt.

Das in den Figuren gezeigte Rohrleitungsanschlussstück ist als T-Anschlussstück ausgebildet, es umfasst einen im Wesentlichen zylindrischen Hauptstrang 1 sowie einen in diesen im Wesentlichen im rechten Winkel einmündenden Nebenstrang 2. Sowohl der Hauptstrang 1 als auch der Nebenstrang 2 sind im Wesentlichen zylindrisch ausgebildet, wobei erfindungsgemäß der Mündungsbereich des Nebenstrangs 2 in den Hauptstrang 1 wichtig ist. Die sich dort durchdringenden virtuellen Zylinder des Hauptstrangs 1 und des Nebenstrangs 2 bilden eine Schnittlinie 3 (Schnittkurve, Durchdringungskurve). Bei einer rechtwinkligen Einmündung und bei zylindrischer Ausgestaltung des Hauptstrangs 1 und des Nebenstrangs 2 ist die Schnittlinie in Form einer räumlichen kreisrunden oder elliptischen Kurve ausgebildet, abhängig von den jeweiligen Durchmessern der virtuellen Zylinder.

Die Schnittlinie 3 weist bei vertikaler Anordnung des Hauptstrangs 1 einen oberen Scheitel 8 auf und geht in einen Umfangsbereich von 90° in seitliche Bereiche 9 über. Im weiteren Verlauf bildet die Schnittlinie 3 einen unteren, dem Scheitel 8 gegenüberliegenden Bereich oder Scheitel 10.

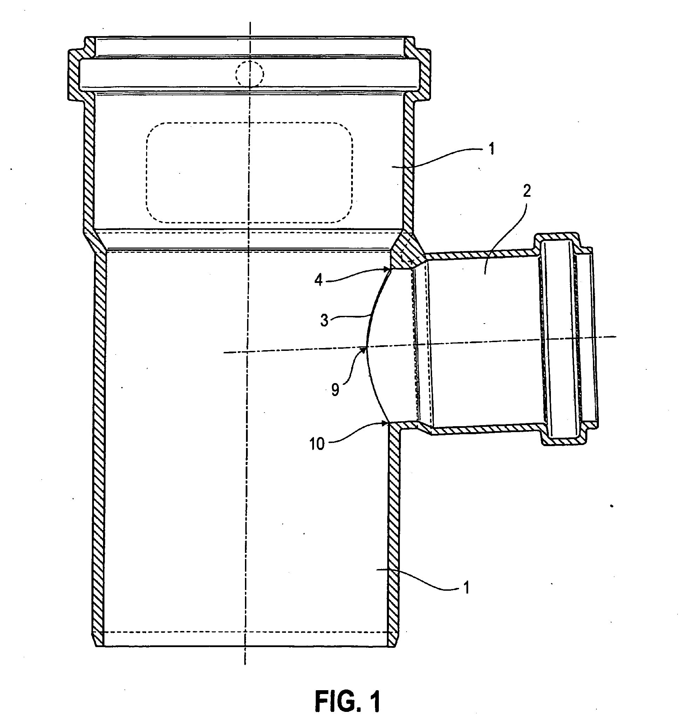

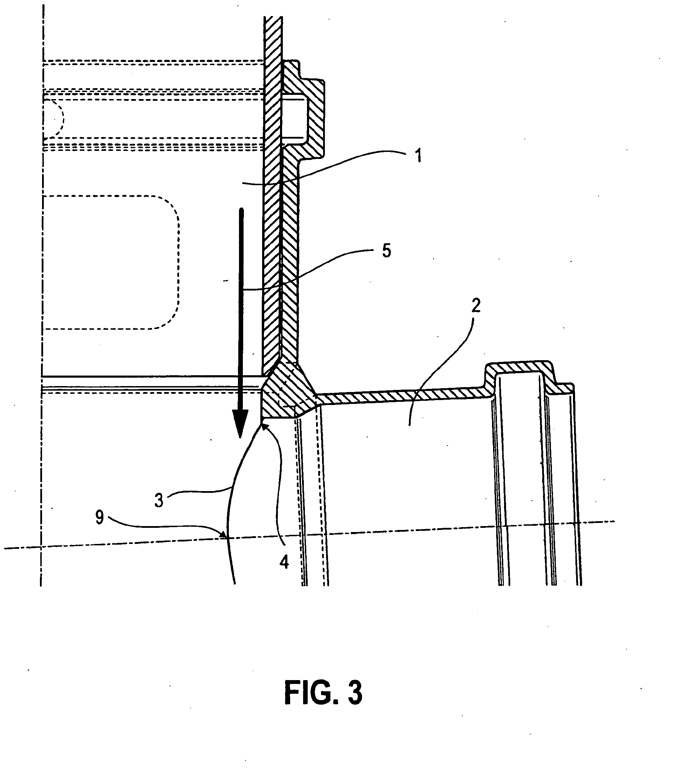

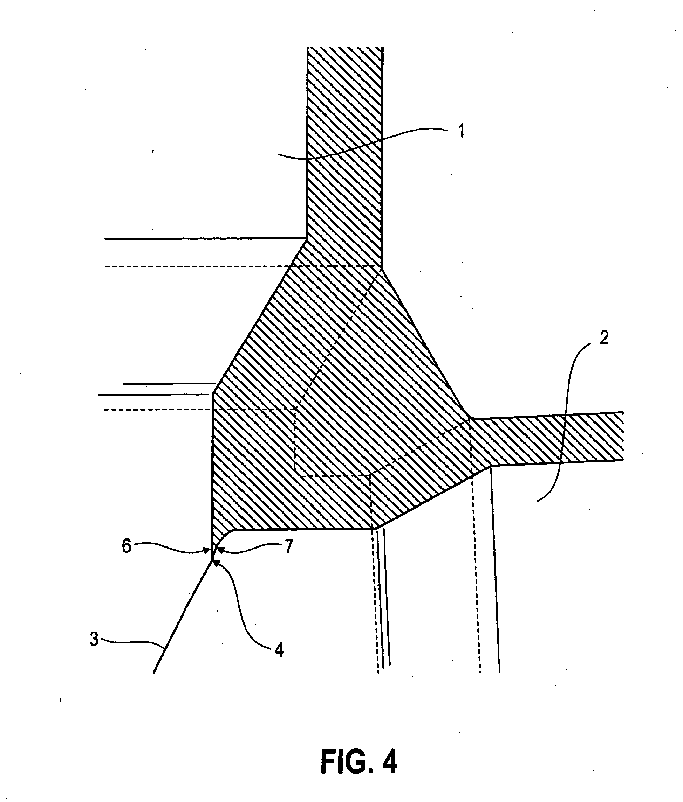

Erfindungsgemäß ist der obere, beidseitig an den Scheitel 8 angrenzende Bereich der Schnittlinie 3 mit einer Abrisskante 4 versehen, so wie dies insbesondere in den Fig. 3 und 4 ersichtlich ist. Die Abrisskante 4 erstreckt sich hinsichtlich ihrer dem Hauptstrang zugewandten Seite 6 auf der Zylindermantellinie des Hauptstrangs 1, während die dem Nebenstrang 2 zugewandte Seite 7 abgerundet, hinterschnitten, abgeschrägt oder mit einer Fase versehen sein kann. Diesbezüglich wird auf Fig. 4 verwiesen. Es versteht sich, dass die Darstellungen der Fig. 1 bis 4 schematischer Art sind, so dass der Übersichtlichkeit halber auf die exakte Darstellung sämtlicher Details der Abrisskante 4 verzichtet wurde.

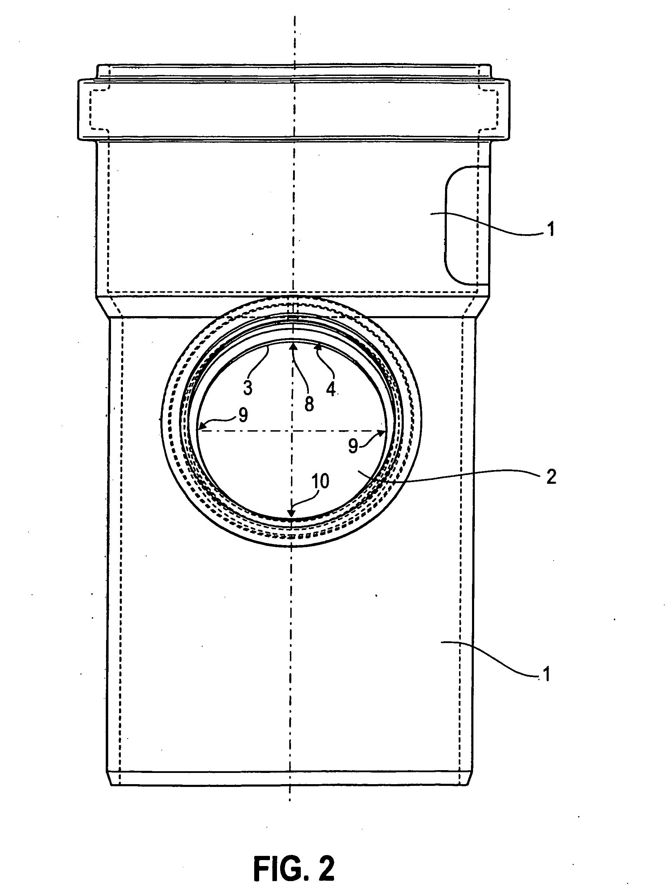

Die Abrisskante 4 erstreckt sich beidseitig (links und rechts verlaufend, gemäß Fig. 2) des Scheitels 8 bis zu den Umfangsbereichen 9 und nimmt von einer maximalen Höhe am Scheitel 8 zu einer minimalen Höhe an den Umfangsbereichen 9 ab. Diese minimale Höhe kann 0 mm betragen.

Im unteren Bereich der Schnittlinie 3 ist diese (nicht näher dargestellt) mit einem Radius versehen, welcher sich von den seitlichen Umfangsbereichen 9 zu dem dem Scheitel 8 gegenüberliegenden Bereich 10 erstreckt. Dieser fakultativ vorgesehene Radius hat am Bereich 10 den größten Wert und läuft im Bereich der Umfangsbereiche 9 auf einen Wert von 0 mm aus.

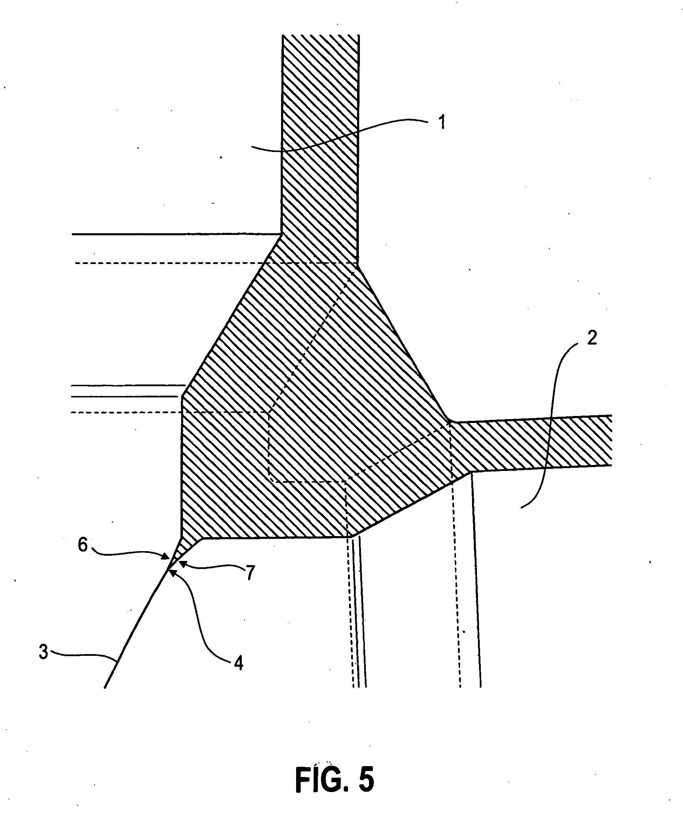

Die Fig. 5 zeigt eine Ausgestaltungsvariante, analog der Darstellung der Fig. 4, welche sich darin unterscheidet, dass die Abrisskante 4 in den Hauptstrang 1 ragt, so dass die dem Hauptstrang 1 zugewandte Seite 6 der Abrisskante 4 in einem Winkel zu der benachbarten Zylinderfläche des Hauptstrangs 1 steht. Hierdurch können sich verbesserte Strömungsverhältnisse ergeben.

### Bezugszeichenliste

- 1: Hauptstrang/Fallstrang
- 2: Nebenstrang/Seitenstrang
- 3: Schnittlinie
- 4: Abrisskante
- 5: Strömungsrichtung des Hauptstrangs
- 6: Seite der Abrisskante 4
- 7: Seite der Abrisskante 4
- 8: Scheitel
- 9: Umfangsbereich von 90°
- 10: dem Scheitel 8 gegenüberliegender Bereich

## Patentansprüche

1. Rohrleitungsanschlussstück mit einem rohrförmigen Hauptstrang (1), in welchen ein rohrförmiger Nebenstrang (2) mündet,
wobei zumindest ein Teilbereich einer Schnittlinie (3) zwischen dem Hauptstrang (1) und dem Nebenstrang (2) in Form einer Abrisskante (4) ausgebildet ist
und die Abrisskante (4) so ausgebildet ist, dass eine Abweichung der Strömungsrichtung (5) eines Fluids im Hauptstrang (1) und ein Eintreten von Fluid in den Nebenstrang (2) vermieden werden,
**dadurch gekennzeichnet,**
**dass** die Abrisskante (4) im Querschnitt keilförmig ausgebildet ist und einen Winkel zwischen 1° und 85° aufweist;
**dass** sich die Abrisskante (4) vom oberen Scheitel (8) der Schnittlinie (3) bis zu jeweils einem seitlichen Umfangsbereich (9) von 90° erstreckt; und
**dass** die Abrisskante (4) im oberen Scheitel (8) die größte Höhe und im Umfangsbereich (9) von 90° eine Höhe von 0 mm aufweist.

2. Rohrleitungsanschlussstück nach Anspruch 1, **dadurch gekennzeichnet, dass** die Abrisskante (4) an einer Seite (6) durch einen zylindrischen Bereich des Hauptstrangs (1) und an der anderen Seite (7) durch einen Ansatz an einem zylindrischen Bereich des Nebenstrangs (2) gebildet wird.

3. Rohrleitungsanschlussstück nach Anspruch 2, **dadurch gekennzeichnet, dass** die Abrisskante (4) an der dem Nebenstrang (2) zugewandten Seite hinterschnitten ist.

4. Rohrleitungsanschlussstück nach Anspruch 2**, dadurch gekennzeichnet, dass** die Abrisskante (4) an der dem Nebenstrang (2) zugewandten Seite mit einem Radius versehen ist.

5. Rohrleitungsanschlussstück nach Anspruch 1, **dadurch gekennzeichnet, dass** die Abrisskante (4) an der dem Nebenstrang (2) abgewandten Seite (6) in einem Winkel in den Hauptstrang (1) ragt.

6. Rohrleitungsanschlussstück nach einem der Ansprüche 1 bis 5, **dadurch gekennzeichnet, dass** die Abrisskante (4) eine Höhe zwischen 1 mm und 2,5 mm aufweist.

7. Rohrleitungsanschlussstück nach einem der Ansprüche 1 bis 5, **dadurch gekennzeichnet, dass** die Abrisskante (4) eine Höhe zwischen 0,1 mm und 10 mm aufweist.

8. Rohrleitungsanschlussstück nach einem der Ansprüche 1 bis 7, **dadurch gekennzeichnet, dass** die Abrisskante (4) im Querschnitt einen Winkel zwischen 10° und 40° aufweist.

9. Rohrleitungsanschlussstück nach einem der Ansprüche 1 bis 8, **dadurch gekennzeichnet, dass** die Schnittlinie (3) an dem nicht mit der Abrisskante (4) versehenen Bereich mit einem Radius versehen ist.

10. Rohrleitungsanschlussstück nach Anspruch 9, **dadurch gekennzeichnet, dass** der Radius am Umfangsbereich (9) der Schnittlinie (3) von 90° 0 mm beträgt und in dem dem Scheitel gegenüberliegenden Bereich (10) einen Maximalwert aufweist.

11. Rohrleitungsanschlussstück nach einem der Ansprüche 1 bis 10, **dadurch gekennzeichnet, dass** die Abrisskante (4) aus demselben Material gefertigt ist, wie das Rohrleitungsanschlussstück.

12. Rohrleitungsanschlussstück nach einem der Ansprüche 1 bis 10, **dadurch gekennzeichnet, dass** die Abrisskante (4) aus einem anderen Material gefertigt ist, als das Rohrleitungsanschlussstück.

13. Rohrleitungsanschlussstück nach Anspruch 12, **dadurch gekennzeichnet, dass** die Abrisskante (4) mittels einer Mehrkomponententechnik gefertigt ist.

## Claims

1. A pipe connecting piece having a tubular main line (1) into which a tubular secondary line (2) opens out, wherein at least a partial portion of an intersection (3) between the main line (1) and the secondary line (2) is formed as a tearing edge (4) and the tearing edge (4) is formed such that a deviation of the direction of flow (5) of a fluid in the main line (1) and an entering of fluid into the secondary line (2) is prevented,
**characterized in that**
the tearing edge (4) is wedge-shaped in cross-section and has an angle between 1° and 85°;
the tearing edge (4) extends from the upper apex (8) of the intersection (3) respectively to a lateral peripheral portion (9) of 90°; and
the tearing edge (4) has its largest height at the upper apex (8) and a height of 0 mm in the peripheral portion (9) of 90°.

2. The pipe connecting piece of claim 1, **characterized in that** the tearing edge (4) is formed by a cylindrical portion of the main line (1) on the one side (6) and by a lug at a cylindrical portion of the secondary line (2) on the other side (7).

3. The pipe connecting piece of claim 2, **characterized in that** the tearing edge (4) is undercut at the side facing the secondary line (2).

4. The pipe connecting piece of claim 2, **characterized in that** the tearing edge (4) is provided with a radius at the side facing the secondary line (2).

5. The pipe connecting piece of claim 1, **characterized in that** the tearing edge (4) angularly protrudes into the main line (1) at the side (6) facing away from the secondary line (2)

6. The pipe connecting piece of one of claims 1 to 5, **characterized in that** the tearing edge (4) has a height between 1 mm and 2.5 mm.

7. The pipe connecting piece of one of claims 1 to 5, **characterized in that** the tearing edge (4) has a height between 0.1 mm and 10 mm.

8. The pipe connecting piece of one of claims 1 to 7, **characterized in that** the tearing edge (4) has an angle between 10° and 40° in cross-section.

9. The pipe connecting piece of one of claims 1 to 8, **characterized in that** the intersection (3) is provided with a radius at the portion not including the tearing edge (4).

10. The pipe connecting piece of claim 9, **characterized in that** the radius is 0 mm at the peripheral portion (9) of the intersection (3) of 90° and has a maximum value in the portion (10) opposite the apex.

11. The pipe connecting piece of one of claims 1 to 10, **characterized in that** the tearing edge (4) is made of the same material as the pipe connecting piece.

12. The pipe connecting piece of one of claims 1 to 10, **characterized in that** the tearing edge (4) is made of a material different from that of the pipe connecting piece.

13. The pipe connecting piece of claim 12, **characterized in that** the tearing edge (4) is made by means of a multi-component technology.

## Revendications

1. Pièce de raccordement de conduite, comprenant une branche principale tubulaire (1) sur laquelle débouche une branche secondaire tubulaire (2),
dans laquelle au moins une zone partielle d'une ligne de coupe (3) entre la branche principale (1) et la branche secondaire (2) est réalisée sous la forme d'un bord de rupture (4),
et le bord de rupture (4) est réalisé de façon à éviter un écart de la direction d'écoulement (5) d'un fluide dans la branche principale (1) et une entrée de fluide dans la branche secondaire (2),
**caractérisée en ce que**
le bord de rupture (4) est réalisé avec une section transversale en forme de coin et présente un angle entre 1° et 85° ;
**en ce que** le bord de rupture (4) s'étend du sommet supérieur (8) de la ligne de coupe (3) jusqu'à respectivement une zone circonférentielle latérale (9) de 90° ; et
**en ce que** le bord de rupture (4) présente au sommet supérieur (8) la plus grande hauteur et dans la zone circonférentielle (9) de 90° une hauteur de 0 mm.

2. Pièce de raccordement de conduite selon la revendication 1, **caractérisée en ce que** le bord de rupture (4) est formé sur un côté (6) par une zone cylindrique de la branche principale (1) et sur l'autre côté (7) par un épaulement au niveau d'une zone cylindrique de la branche secondaire (2).

3. Pièce de raccordement de conduite selon la revendication 2, **caractérisée en ce que** le bord de rupture (4) est contre-dépouillé sur le côté tourné vers la branche secondaire (2).

4. Pièce de raccordement de conduite selon la revendication 2, **caractérisée en ce que** le bord de rupture (4) est muni d'un rayon sur le côté tourné vers la branche secondaire (2).

5. Pièce de raccordement de conduite selon la revendication 1, **caractérisée en ce que** le bord de rupture (4) fait saillie sous un angle dans la branche principale (1) sur le côté (6) détourné de la branche secondaire (2).

6. Pièce de raccordement de conduite selon l'une quelconque des revendications 1 à 5, **caractérisée en ce que** le bord de rupture (4) présente une hauteur entre 1 mm et 2,5 mm.

7. Pièce de raccordement de conduite selon l'une quelconque des revendications 1 à 5, **caractérisée en ce que** le bord de rupture (4) présente une hauteur entre 0,1 mm et 10 mm.

8. Pièce de raccordement de conduite selon l'une quelconque des revendications 1 à 7, **caractérisée en ce que** le bord de rupture (4) présente en section transversale un angle entre 10° et 40°.

9. Pièce de raccordement de conduite selon l'une quelconque des revendications 1 à 8, **caractérisée en ce que** la ligne de coupe (3) est munie d'un rayon dans la zone non munie du bord de rupture (4).

10. Pièce de raccordement de conduite selon la revendication 9, **caractérisée en ce que** le rayon au niveau de la zone circonférentielle (9) de la ligne de coupe (3) de 90° est de 0 mm et présente une valeur maximale dans la zone (10) opposée au sommet.

11. Pièce de raccordement de conduite selon l'une quelconque des revendications 1 à 10, **caractérisée en ce que** le bord de rupture (4) est réalisé à partir du même matériau que la pièce de raccordement de conduite.

12. Pièce de raccordement de conduite selon l'une quelconque des revendications 1 à 10, **caractérisée en ce que** le bord de rupture (4) est fabriqué à partir d'un autre matériau que la pièce de raccordement de conduite.

13. Pièce de raccordement de conduite selon la revendication 12, **caractérisée en ce que** le bord de rupture (4) est réalisé au moyen d'une technique à plusieurs composants.
